Europäisches Patentamt

European Patent Office

Office européen des brevets

(19)

(11) Publication number: **0 049 223**
**A2**

# EUROPEAN PATENT APPLICATION

(21) Application number: **81830153.3**

(22) Date of filing: **08.09.81**

(51) Int. Cl.³: **B 23 Q 7/00,** B 65 G 25/08

(30) Priority: **01.10.80 IT 2296880 U**

(43) Date of publication of application: **07.04.82**
**Bulletin 82/14**

(84) Designated Contracting States: **AT BE CH DE FR GB LI**
**LU NL SE**

(71) Applicant: **NORDA S.p.A., Via Vallecamonica, 14/F,**
**Brescia (IT)**

(72) Inventor: **Duina, Gian Franco, Via Mantova, 88, Brescia**
**(IT)**

(74) Representative: **Zorzoli, Franco, c/o BUGNION S.p.A.**
**Via Carlo Farini 81, I-20159 Milan (IT)**

(54) **Self-acting arm for the feeding and unloading of machines in general.**

(57) A self-acting arm for the feeding and unloading of machines in general, consisting of a fixed casing, in which are housed guides allowing the sliding of an articulated quadrilateral carrying at the ends of its movable sides an arm equipped with grasping members. This arm, rotatably connected to said quadrilateral, is provided both with vertical upward and downward motion, by means of cams placed at the ends of said guides, and with reciprocating horizontal motion obtained by means of a link control system providing the utilization of a horizontal guide, of a vertically to-and-fro slidable cylinder rigidly connected thereto, of a geared motor which imparts a rotating movement to a crank having one end thereof rotatably engaged in said horizontal guide and of gears and chains suitable for driving the movement.

Self-acting arm for the feeding and unloading of machines in general

This invention relates to a self-acting arm of the kind comprising a fixed casing in which are housed slides which allow a carriage carrying an articulated quadrilateral to slide, there being provided control means to determine the reciprocating movement of said carriage on the slides and cam means to determine the vertical upward and downward movement of an arm parallelly and rotatably connected at the ends of the quadrilateral movable sides, to the ends of the above mentioned carriage stroke, particularly used for the feeding and unloading of machines in general; more particularly it relates to a device for the automatic transport of a piece to be worked from a drawing store to an intermediate centering station and subsequently to a final working station and to a stocking store of worked pieces respectively.

At present, according to the known art, there are self-acting arms for the automatic feeding of pieces to be worked, to machines which provide for the transport of pieces successively from a drawing store to an intermediate centering station and to a working station, consisting of a support structure carrying a head in which is accommodated the mechanism for the movement of an arm located in front or laterally with respect to the machine, provided on its lower part with grasping members and movable to-and-fro according to a horizontal and vertical direction.

The problem of the present invention is to accomplish a self-acting arm which, while carrying out the same operations as the self-acting arms of the known art, is not completely independent from the machine with which it acts, for example a press, and apart therefrom, but intimately connected to it.

This problem is solved, according to the invention, by a self-acting arm for the feeding and unloading of machines in general, of the kind comprising a fixed casing in which are housed slides which allow a carriage carrying an articulated quadrilateral to slide, there being provided control means to determine the reciprocating movement of said carriage on the slides and cam means to determine the vertical upward and downward movement of an arm parallelly and rotatably connected at the ends of the quadrilateral movable sides, to the ends of the above mentioned carriage stroke, characterized in that said control means to determine the reciprocating movement of said carriage consists of a link control system providing a horizontal guide rigidly connected to a cylindrical member slidable to-and-fro along a fixed vertical rod, provided with an element, slidable within a vertical guide, suitable to prevent the horizontal guide rotation about an axis parallel to the axis of said fixed rod, along which guide can slide the end of a crank rotated by a geared motor and a gear pair round which a toothed belt is wound up having a portion thereof rigidly connected to said cylindrical member integral to the horizontal guide, slidable to-and-fro, of which gear pair one is idly mounted on a first pin rigidly fixed to the casing and the other is fixedly fitted to one end of a second pin, carrying fixedly fitted to its opposite end, a gear of bigger diameter connecting a second toothed belt which imparts a horizontal to-and-fro motion to the frame carrying the articulated quadrilateral.

Further features and advantages will appear more evident from the detailed description of a preferred embodiment which is to be interpreted as illustrative and not in a limiting sense, of a self-acting arm for the feeding and unloading of machines in general, given hereinafter, by way of example only, with reference to the accompanying drawings, in which :

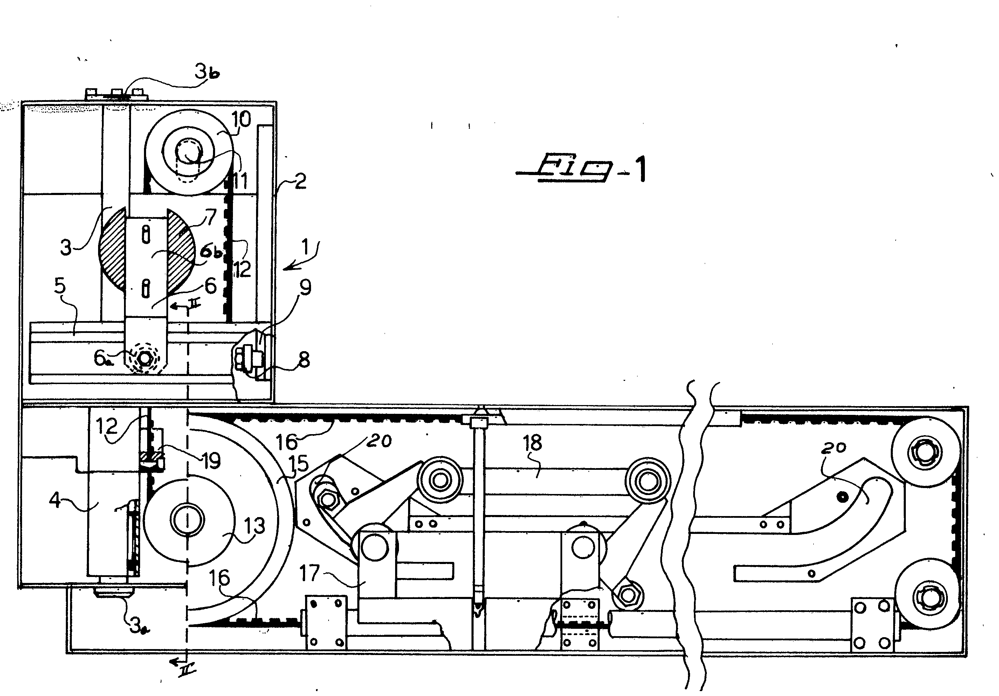

- Fig. 1 is a side view of the apparatus according to the invention;

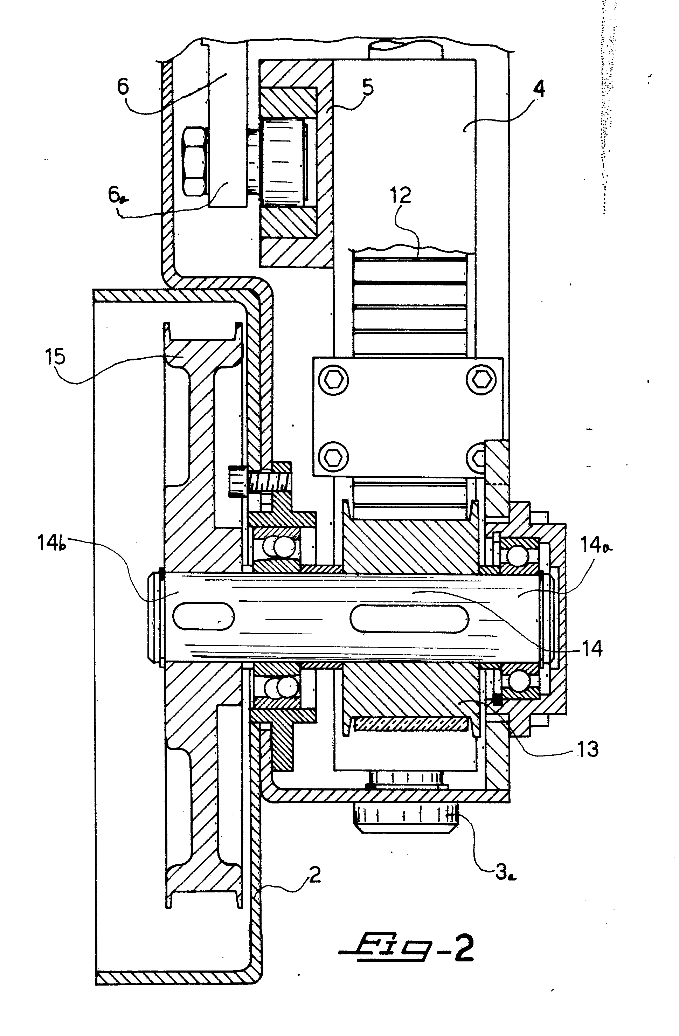

- Fig. 2 is a part section along the line II-II of Fig. 1;

- Figs. 3, 4, 5 and 6 show the sequence of the positions of the grasping arm belonging to the apparatus of the invention.

Referring to the drawings and especially to the first figure, the apparatus shown therein, indicated at 1 as a whole, substantially consists of a fixed casing 2 to which the end portions 3a and 3b of a rod 3 are anchored. A cylindrical member 4 rigidly connected to a horizontal guide 5 is coupled to said rod 3.

An end 6a (crank pin) of a crank 6 is engaged with the horizontal guide 5, the opposite end 6b of this crank being connected to a shaft 7 rotated by a geared motor not shown in the figures.

A member 8 slidably engaged within a vertical guide 9 and suitable to prevent the rotation of the horizontal guide 5 about an axis parallel to the axis of the rod 3 is then connected to one end of the horizontal guide 5.

A gear 10 is placed at the upper portion of the casing 2, idly mounted on a pin 11 and a toothed belt 12 is wound up round it, which belt, in turn, engages with a second toothed gear 13 fixedly fitted to one end 14a of a second pin 14, placed at the lower portion of the fixed casing 2 carrying fixedly fitted to its opposite end 14b, a toothed gear 15 of a bigger diameter, connecting a second belt 16 which imparts the horizontal to-and-fro movement to the frame 17 carrying the articulated quadrilateral 18. Said toothed belt 12 is, in turn, rigidly fixed, by means of a stop means 19 to the cylindrical member 4.

As regards the operation and positioning of the self-acting arm according to the invention, it takes place in accordance with the follow ing modalities.

First the self-acting arm is positioned to the side of the flat surface of the machine, for example a press, to which said self-acting arm has to be coupled. Then the collecting stores of worked pieces and of the ones to be worked are placed at the end of the self-acting arm; they can be either of the type having a rotating magazine provided with four self-rotating stations or of the type having a rotating magazine provided with two self-rotating stations, or of the hand-type provided with hand-protector, at least as regards the loading side.

From what above described it appears that the movable arm 30, equipped with four grasping members 33, 34, 35 and 36, is provided with a horizontal to-and-fro movement combined with a strictly vertical upward and downward movement.

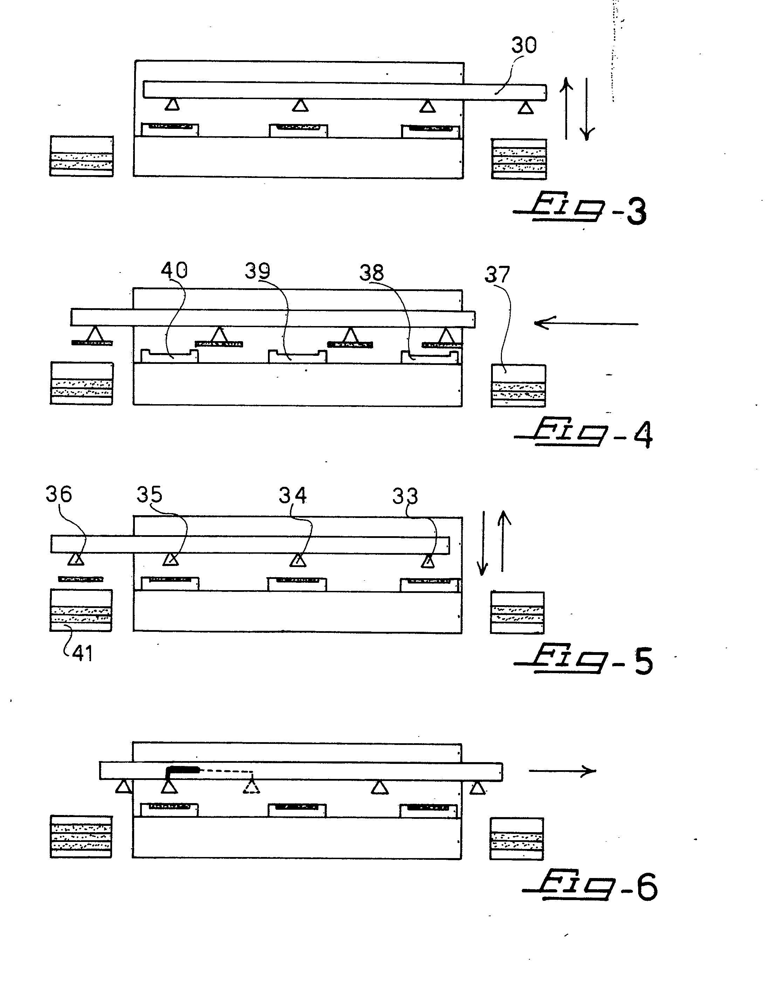

Referring to figures 3, 4, 5 and 6, the movable arm 30 carries out a first downward-upward vertical movement, due to the presence of the cams 20 at the ends of the carriage stroke, in order to cause the grasping members 33, 34, 35 and 36 to grasp the pieces disposed in the store 37, in the centering station 38, on the die 39 and in the second centering station 40 respectively. After the grasping is carried out, owing to the presence of the link system previously described, through which the rotary motion of crank 6 is turned into a linear reciprocating and sinusoidal movement of carriage 17, the arm 30 moves horizontally from right to left (looking to the drawings) until the grasping member 33 and the corresponding piece thereof comes into register with the centering station 38, the grasping member 34 comes into register with the die 39, the grasping member 35 comes into register with the second centering station 40 and the grasping member 36 comes into register with the second store 41, respectively.

As the arm 30 has reached such position, always due to the presence of the cams 20, it carries out a quick vertical downward-upward movement and leaves down the pieces it had previously picked up. At this point, owing to the presence of the link system which causes a change in the movable arm traverse direction at every half rotation of crank, the movable arm moves quickly back until it reaches the position described in Fig. 3, i.e. the starting position of a new cycle.

However, it is to be noted that the grasping member 35 will not simultaneously follow the return motion of arm 30, but it will be stopped, by every means adapted for the purpose, in close proximity to the grasping member 36 in order to allow the press to carry out the pressing in station 39. As the pressing has been accomplished, automatically the above grasping member 35 will be able to go back to its original position.

Among the advantages resulting from the use of this self-acting arm, it is to be remarked that by means of the link system described above it is possible to change the two upward-downward strokes of the movable arm 30 at both ends of the horizontal stroke, independently from one another, by simply varying the diameter of the crank pin 6a and the position of the toothed belt 12 on the support 19.

It is also possible to disengage the self-acting arm from the machine, by means of a system allowing the rotation thereof about an axis.

By manually operating a handwheel, with which the electric motor of the gear box can be provided, it is also possible to cover the whole path of the arm; thus, repeating the cycle backwardly, the piece is allowed to go back from the die to the centering station and then to the store to carry out the few necessary adjustments at the die change.

Finally, the above mentioned grasping members can be adjustable and interchangeable in order to fit different dies and pieces.

Obviously, though the embodiment of the invention described above is the preferred one, it is not intended to comprise a limitation and modifications can be carried out to the machine itself within the scope of the claims.

C L A I M S

1) A self-acting arm for the feeding and unloading of machines in general, of the kind comprising a fixed casing in which are housed slides which allow a carriage carrying an articulated quadrilateral to slide, there being provided control means to determine the reciprocating movement of said carriage on the slides and cam means to determine the vertical upward and downward movement of an arm parallelly and rotatably connected at the ends of the quadrilateral movable sides, to the ends of the above mentioned carriage stroke, characterized in that said control means to determine the reciprocating movement of said carriage consists of a link control system providing a horizontal guide rigidly connected to a cylindrical member slidable to-and-fro along a fixed vertical rod, provided with an element, slidable within a vertical guide, suitable to prevent the horizontal guide rotation about an axis parallel to the axis of said fixed rod, along which guide can slide the end of a crank rotated by a geared motor and a gear pair round which a toothed belt is wound up having a portion thereof rigidly connected to said cylindrical member integral to the horizontal guide, slidable to-and-fro, of which gear pair one is idly mounted on a first pin rigidly fixed to the casing and the other is fixedly fitted to one end of a second pin, carrying  fixedly fitted to its opposite end, a gear of bigger diameter connecting a second toothed belt which imparts a horizontal to-and-fro motion to the frame carrying the articulated quadrilateral.

2) A self-acting arm according to claim 1, characterized in that said arm carries four grasping members spaced of a length corresponding to the horizontal stroke of  the carriage.

3) A self-acting arm according to claim 2, characterized in that one of the four grasping members is horizontally movable with respect to the others.

4) A self-acting arm for the feeding and/or unloading of machines in general, substantially as hereinbefore described with reference to the accompanying drawings.

0049223

Fig-1

0049223

Fig-2

_Fig_-3

30

_Fig_-4

40    39    38    37

_Fig_-5

36    35    34    33

41

_Fig_-6